# EUROPÄISCHE PATENTSCHRIFT

(11) **EP 1 843 826 B1**
(45) Veröffentlichungstag und Bekanntmachung des Hinweises auf die Patenterteilung: **06.06.2012**
(21) Anmeldenummer: 06703833.1
(22) Anmeldetag: 27.01.2006
(51) Int. Cl.: B01D 21/00, B01D 17/02, C01F 1/00

(54) **FESTSTOFF-ABSCHEIDEVORRICHTUNG, KOMPAKTANLAGE UND ABSCHEIDEVERFAHREN**
SOLID SEPARATING APPARATUS, COMPACT ASSEMBLY, AND SEPARATING METHOD
DISPOSITIF DE SEPARATION DE MATIERES SOLIDES, INSTALLATION COMPACTE ET PROCEDE DE SEPARATION

(30) Priorität: 28.01.2005 DE 102005004230
(43) Veröffentlichungstag der Anmeldung: 17.10.2007
(73) Patentinhaber: Kolb, Frank Reiner, 65604 Elz-Malmeneich (DE)
(72) Erfinder: Kolb, Frank Reiner, 65604 Elz-Malmeneich (DE)
(74) Vertreter: Mollekopf, Gerd Willi
(86) Internationale Anmeldenummer: PCT/EP2006/000709
(87) Internationale Veröffentlichungsnummer: WO 2006/079541

(56) Entgegenhaltungen:
- WO-A-03/078019
- DE-A1- 4 302 003
- DE-A1- 19 520 975
- DE-U1- 29 623 598
- FR-A- 2 688 416
- US-A- 4 514 303
- US-A- 4 957 628
- US-A- 5 538 631

## Beschreibung

Die Erfindung betrifft eine Vorrichtung, eine Einrichtung, eine Kompaktanlage bzw. Abscheideanordnung sowie ein Verfahren zur Abscheidung von Feststoffen aus einer Flüssigkeit, insbesondere im Bereich der Trink- oder Abwasserbehandlung.

Die Abscheidung von Grobstoffen und Suspensa stellt eine wesentliche Aufgabe im Bereich der Umweltschutztechnik dar, insbesondere bei der Trinkwasseraufbereitung, der Prozesswasser- oder Regenwasserbehandlung, sowie in der Abwasserableitung und Abwasserreinigung. Der Abscheidegrad und die Trennschärfe werden im Wesentlichen durch die spezifische Flächenbeschickung beeinflusst, wobei sich diese proportional zur Trennkomgröße, beispielsweise von mineralischen, metallischen oder organischen Partikeln, verhält. Zur Abscheidung von kleinen Trennkomgrößen müssen, ohne zusätzliche Einbauten, Behälter mit sehr großen Oberflächen realisiert werden. Aus dem Bereich des Bergbaus entwickelten sich maschinentechnische Verfahren, die eine Erhöhung der wirksamen Abscheidefläche bei kleinen Behälteroberflächen ermöglichten. Überwiegend wurde die wirksame Abscheidefläche durch den Einbau von parallel zueinander angeordneten Flächen, so genannten Lamellen, die eine Schrägstellung (Anstellwinkel) bezüglich der Senkrechten aufweisen, vergrößert. Die mit partikulären Schmutzstoffen beladene Flüssigkeit zirkuliert innerhalb des Behälters oder Beckens über die Lamellenoberfläche, an der die Partikel abgeschieden werden.

Aufgrund der Schrägstellung der Lamellen und der unterschiedlichen physikalisch-chemischen Eigenschaften (Dichte, Struktur, Oberflächenladung usw.) der Partikel, insbesondere ihren lipo- oder hydrophilen Eigenschaften, kann es zu Ablagerungen auf den Lamellen kommen. Die Entfernung erfolgt durch Umstellung der Lamellen zwischen einer Abscheideposition und einer Reinigungsposition. Der Winkel in Bezug auf die Senkrechte hängt in der Abscheideposition von der gewünschten Trennkorngröße ab. In der Reinigungsposition stehen die Lamellen in etwa senkrecht, damit aufgrund der Schwerkraft die Ablagerungen abrutschen können und so die Lamellenoberfläche abgereinigt wird.

Die Reinigung der Lamellen wird jedoch nicht nur durch deren Stellung, sondern auch durch den Zeitraum, innerhalb dessen die Abreinigung erfolgt, also den Reinigungszyklus, festgelegt. Die Umschaltung zwischen der Abscheide- und Reinigungsposition wird in der Patentschrift US-A-4,514,303 durch eine motorbetriebene Winde ermöglicht, wobei der Reinigungszyklus selbst manuell gesteuert wird. Diese Steuerung hat den wesentlichen Nachteil, dass immer eine visuelle Kontrolle der Lamellen notwendig ist. Diese Kontrolle ist besonders bei überdeckten Becken mit einem erhöhten kostenmäßigen, personellen und unfallverhütungstechnischem Aufwand verbunden.

In der Patentschrift DE 697 01 121 T2 erfolgt der Wechsel zwischen der Abscheide- und Reinigungsposition schwimmergesteuert (entweder durch zusätzliche Schwimmkörper oder durch ein Lamellenmaterial mit einer geringeren Dichte als Wasser), wobei während des Füllvorganges des Beckens die Abscheideposition durch die Lamellen eingenommen wird. Der Reinigungszyklus wird durch die Füll- und Entleerungszyklen des Beckens festgelegt. Als Voraussetzung für einen ordnungsgemäßen Betrieb ist bei dieser Variante ein Wechsel zwischen den Füllständen in den Becken notwendig. Durch diese Kopplung von Füllstand im Becken und Position der Lamellen weist diese Steuerungsvariante zwei erhebliche Nachteile auf, die zum einen durch die normalen Entleerungszeiten besonders im Bereich der Abwasserableitung und zum anderen durch dauereingestaute Becken bedingt sind.

Im Bereich der Prozess- und der Regenwasserbehandlung sowie in der Abwasserableitung dauert im vielen Fällen der Wechsel zwischen der Füllphase und dem Entleerungsbeginn von Speicherbecken mehr als 6 Stunden. Diese Einstauzeit ergibt sich meistens aus der Größe des Speichervolumens, den Produktionsprozessen, der Größe des Entwässerungsgebietes und der Belastung der Kläranlage. Was bei den bekannten Vorrichtungen nicht berücksichtigt wurde, ist dass die eigentliche Feststofffracht den Becken bzw. Behältern jedoch innerhalb der ersten 30 bis 60 Minuten zugeführt wird, so dass die Lamellen während dieser Zeit die Remigungsposition einnehmen sollten.

Bei der schwimmergestsuerten Variante haben die Ablagerungen, hier im Besonderen die lipophilen Stoffe, genügend Zeit, sich an der Oberfläche der Lamellen anzulagern und gelartige Agglomerate zu bilden. Diese Agglomerate können auch in der Reinigungsposition nicht alleine durch die Schwerkraft entfernt werden und bilden mit zunehmenden Einstauereignissen immer stärkere Beläge aus. Bei dauereingestauten Becken, wie beispielsweise bei der Trinkwasserbehandlung, Regenklärbecken, Sandfängen, Vorklär- und Nachklärbecken von Kläranlagen sowie in Belebungsbecken, kann diese Steuerungsvariante in keinem Fall eingesetzt werden, da bei vollgefüllten Becken die Lamellen niemals ihre Reinigungsposition einnehmen.

Die US 5,538,631 betrifft eine Abscheidevorrichtung, die nach dem Prinzip der Flotation arbeitet. Bei der Flotation sinkt ein Teil der festen Verunreinigungen im Luft/Wasser-Gemisch durch die Verringerung der Dichte des Flüssigkeir/Luftgemisches schneller aus der Flüssigkeit in Richtung Behälterboden ab. Ein anderer Teil der Verunreinigungen (z.B. filzartige Schwebstoffe) steigen durch Anlagerung von Luftblasen an die Flüssigkeitsoberfläche nach oben auf und werden dort von Platten einer Fördereinrichtung abtransportiert. Matrixartig sind synchron verschwenkbare Lamellen im Becken angeordnet. Zwischen den Lamellen steigen die Luftblasen von am Beckenboden angeordneten Pressluftrohren auf. Die Funktion der Lamellen ist es, über den Querschnitt des Beckens vom Zulauf zum Auslauf eine möglichst gleichmäßige, laminare Strömung trotz der aufsteigenden Luftblasen zu bewirken.

Die US 4,957,628 schlägt einen Lamellenabscheider mit einer Vielzahl paralleler Lamellen im Abscheidebecken vor. An den Lamellenoberflächen erfolgt eine Abscheidung von Feststoffen, die von Zeit zu Zeit durch Verschwenken der Lamellen in eine vertikale Stellung entfernt werden.

Ähnlich zur US 4,957,628 offenbart die DE 296 23 598 U1 einen Lamellenabscheider, bei dem die Neigungsstellung der Lamellen auf unterschiedliche Strömungen, Trenngrade und individuelle Sinkgeschwindigkeit der Feststoffe eingestellt werden soll. Absatz. Ein gemeinsamer Verstellmechanismus der Lamellen ist vorgesehen.

Es ist Aufgabe der Erfindung, eine Vorrichtung zur Abscheidung, eine Anordnung mit einer solchen Vorrichtung und ein Abscheideverfahren vorzusehen, bei denen die Reinigung in einer Abscheidevorrichtung kostengünstig und effizient erfolgt.

Diese Aufgabe wird mit den Merkmalen des Anspruchs 1, 8 bzw. 11 gelöst. Vorteilhafte Ausgestaltungen sind Gegenstand von Unteransprüchen.

Zur Lösung dieser Aufgabenstellung wurde eine Steuergröße gefunden, die eine Aussage über die Fliess- und Feststoffbedingungen in einem Reinigungsbecken zulässt, die unabhängig von deren Füllstand ist. Innerhalb der Umweltschutztechnik, insbesondere der Regenwasserbehandlung und/oder der Abwasserableitung und/oder der Abwasserreinigung, führt die Nutzung der Strömung bzw.

Strömungsgeschwindigkeit zu einer kostengünstigen und effizienten Steuerung einer Abscheideeinrichtung (z.B. Abscheidelamellen) in einem Becken.

Hierfür werden ein Verfahren, eine Vorrichtung und eine Abscheideanordnung vorgeschlagen, bei denen die Strömung der zu- oder ablaufenden Flüssigkeit bzw. die Strömungsgeschwindigkeit beispielsweise im Zu- oder Ablaufbereich des Beckens oder Behälters oder innerhalb des Beckens oder Behälters erfasst wird. Üblicherweise ist die Feststoffbeladung der Flüssigkeit direkt proportional zur Strömungsgeschwindigkeit, da beide, Beladung und Geschwindigkeit, über die Schleppkraft miteinander gekoppelt sind. Wenn die Strömungsgeschwindigkeit erfasst wird und in einen Druck und/oder eine Kraft umgewandelt wird, kann durch diese Kraft die Abscheideeinrichtung oder Teile der Abscheideeinrichtung so positioniert werden, dass ihre projizierte Fläche für die Feststoffabscheidung für die jeweilige Flüssigkeitszufuhr bzw. Feststoffzufuhr angepasst wird.

Gemäß Anspruch 1 wird vorteilhaft die Stellung der Abscheideeinrichtung mittels einer Steuereinrichtung so beeinflusst, dass mit einsetzender oder zunehmender Strömung die umströmte Fläche vergrößert wird, so dass bei der Feinstoffabscheidung die wirksame Fläche bzw. die Flächenwirkung erhöht wird.

Falls die Abscheideeinrichtung für die Feststoffabscheidung verstellbar angeordnete Abscheideflächen, so genannte Lamellen, besitzt, reicht die Verstellung dieser zur angepassten Feststoffabscheidung aus:

Die Strömungsgeschwindigkeit wird mit einer Steuereinrichtung erfasst, die beispielsweise ein Gehäuse und einen Strömungskörper (nachfolgend als Körper bezeichnet) aufweist. In der Steuereinrichtung wird die Strömungsgeschwindigkeit in einen Staudruck umgewandelt, der eine Kraft auf die Oberfläche des Körpers ausübt. Diese Kraft führt zu einer Bewegung des verschiebbar angeordneten Körpers in der Steuereinrichtung, die wiederum zur Positionsänderung bzw. Änderung der Ausrichtung der Abscheideflächen eingesetzt werden kann. Die Bewegung kann beispielsweise über eine mechanische Verbindung auf die Abscheideflächen (Lamellen) übertragen werden und so deren Position bzw. Anstellwinkel verändern.

Die Rückstellkraft für den Strömungskörper kann beispielsweise durch die Gewichtskraft der Lamellen bzw. Abscheideflächen erzeugt werden. Vorteilhaft weisen die Lamellen bzw. das Lamellenpaket eine größere mittlere Dichte als die umgebende Flüssigkeit (z.B. Wasser in der Regenwasserbehandlung, der Abwasserableitung oder der Abwasserreinigung) auf, so dass der Abtrieb zur Rückstellung des Strömungskörpers führt. Alternativ oder zusätzlich ergibt sich eine Rückstellkraft aus dem Auftrieb des Strömungskörpers selbst, wenn die mittlere Dichte des Strömungskörpers leichter als die umgebende Flüssigkeit ist. Unterstützend oder ebenfalls alternativ wird die Rückstellung über eine federbetätigte Rückstelleinrichtung (z.B. über eine Federspannung) oder über eine schwerkraftbetätigte Rückstelleinrichtung bewirkt (z.B: Gewicht eines Gewichtselements wirkt auf den Strömungskörper oder die Lamellen entgegen der Strömungskraft).

Da die Bewegungsänderung des Strömungskörpers ebenfalls proportional zur Strömungsgeschwindigkeit ist, wird der Anstellwinkel mit höherer Strömungsgeschwindigkeit und Feststoffbeladung größer, so dass sich die horizontal projizierte Fläche vergrößert und mehr Feststoffe abgeschieden werden können.

In der Regenwasserbehandlung und der Abwasserableitung nimmt die Strömungsgeschwindigkeit nach dem Einstau des Beckens oder des Behälters ab und der Strömungskörper geht auf seine Ausgangsposition zurück, so dass die Lamellen ihre Reinigungsposition einnehmen. Unabhängig von der Einstaulänge und der Füllhöhe wird bei diesem Verfahren immer wieder die Reinigungsposition eingenommen, so dass die Zeiträume, um eine nicht entfernbare Ablagerung auf den Lamellen zu ermöglichen, viel zu kurz sind.

In der Abwasserreinigung folgt die Strömungsgeschwindigkeit der Tagesganglinie des Abwassers, so dass auch in diesen Becken oder Behältern bei geringen Zuflussvolumina die Reinigungsposition eingenommen wird und eine Abreinigung der Lamellen erfolgt.

Eine andere Weiterbildung besitzt eine Steuereinrichtung, die einen perforierten Strömungskörper aufweist. Dadurch können sich während des Durchströmvorganges Feststoffe aus der Flüssigkeit an den Durchbrechungen bzw. oberhalb und/oder innerhalb der Durchbrechungen ablagern und so den Druckverlust des Körpers während der Durchströmung in Abhängigkeit der Feststoffbeladung erhöhen. Der Anstieg des Strömungsdruckverlustes des Körpers führt wiederum zu einer Bewegung desselben, die zur Positionsveränderung für die Lamellen genutzt wird.

In einer anderen Weiterbildung strömt die feststoffbeladene Flüssigkeit innerhalb eines Kanals an einem Verbindungselement, beispielsweise an einem Rohr, entlang. Dieses Element ist mit der einen Seite einer Druckdose verbunden, die mindestens zwei durch eine Membrane getrennte Druckkammern besitzt. Die zweite Druckkammer ist beispielsweise mit dem Umgebungsdruck beaufschlagt. Die beiden Druckkammern wirken wie ein Differenzdruckmesser, bei dem die Membrane in der Null-Lage eben ausgerichtet ist. Durch die strömende Flüssigkeit wird gegenüber dem Umgebungsdruck ein geringerer Druck erzeugt, so dass die vorgespannte Membrane aus ihrer Mittenlage auslenkt. Diese Veränderung der Mittenlage der Membrane kann zur Steuerung der Lamellen verwendet werden.

Die zuvor genannten Steuereinrichtungen können nur eine indirekte, nicht-quantitative Erfassung der Feststoffe ermöglichen, wobei in einer Weiterbildung des Verfahrens Sensoren eingesetzt werden, die eine indirekte, quantitative Aussage über die vorhandenen Feststoffe in der Flüssigkeit zulassen. Bei entsprechenden Eigenschaften der Feststoffe kann der mechanische Sensor in der Steuereinrichtung beispielsweise die kumulierte Masse der Feststoffe ermitteln (Sedimentationswaage), der elektrische Sensor die Leitfähigkeit, der optische Sensor die Trübung sowie der hydraulische Sensor die Zähigkeit. Die Messgrößen werden z.B. in ein proportionales Signal umgewandelt. Dieses Signal kann durch die Steuereinrichtung auf ein Stellglied übertragen und auf mechanischem, elektrischem, pneumatischem oder hydraulischem Wege die Ansteuerung der entsprechenden Lamellenposition durchführen. Wird der Feststoffgehalt in der Behälterflüssigkeit oder die Position der Lamellen über einen zusätzlichen Fühler erfasst, so kann der Steuerkreis zu einem Regelkreis erweitert werden.

Eine kostengünstige Weiterbildung der Steuereinrichtung besteht in der zusätzlichen Positionsveränderung der Lamellen in zeitlich diskreten Schritten. Als Steuereinrichtung kann beispielsweise eine Schaltuhr verwendet werden, die ein Stellglied ansteuert, welches die Lamellen beispielsweise in einem halbstündigen Rhythmus aus ihrer Abscheideposition in die Reinigungsposition umschaltet und nach beispielsweise 5 min Reinigungsdauer wieder in die Abscheideposition umschaltet.

Um eine möglichst leichte und kostengünstige Konstruktion der gesamten Abscheideeinrichtung zu ermöglichen ist in einer Weiterbildung das Verbindungselement zwischen Steuereinrichtung und Auslenk- bzw. Umlenkeinrichtung beispielsweise als Seil, Kette oder stabförmiges Gestänge ausgeführt. Diese Verbindungselemente können nur Zug- und keine Druckkräfte übertragen. Aus diesem Grund müssen die Verbindungselemente nur auf eine Kraftrichtung dimensioniert werden und können deshalb mit einem geringen Gewicht ausgeführt werden. Diese Art der Verbindungselemente führt vorteilhafterweise zu geringen Massenträgheitsmomenten, so dass die Steuereinrichtung nur minimale, zusätzliche Stellkräfte aufbringen muss, um die Lamellenposition zu verändern.

In den zu reinigenden Flüssigkeiten, beispielsweise Niederschlagswasser, sind nicht nur partikuläre Stoffe vorhanden, sondern auch gelöste Stoffe wie beispielsweise Schwermetalle, Nitrat, Nitrit, Chloride, Sulfate oder Metall-Organo-Verbindungen, die über -aktive Medien wie beispielsweise Aktivkohle, Aktivkoks, Klinoptiolith oder Hydroxyl-Apatit adsorptiv gebunden werden können. Deshalb wird in einer Weiterbildung des Verfahrens ein Kompositaufbau der Lamellen vorgeschlagen. Der Kompositaufbau der Lamellen kann so ausgeführt sein, dass das Material mit den aktiven Schichten zur Entfernung der gelösten Stoffe lösbar mit den eigentlichen Abscheideflächen oder unlösbar mit ihnen verbunden ist. Die lösbare Verbindung hat den Vorteil, dass die Adsorbentien auch nachträglich an spezielle Schadstoffe in der Flüssigkeit angepasst werden können.

In Ausgestaltung der Abscheidefläche weist diese einen Kompositaufbau auf. Bei einer unlösbaren Verbindung besitzt der Kompositaufbau den Vorteil, dass die Lamellen ein geringeres Gewicht aufweisen und dadurch mit einem geringeren Aufwand montiert werden können. Dies ist besonders vorteilhaft, wenn die Abscheideeinrichtung in überdeckte Bauwerke wie Schächte oder Regenbecken eingebaut wird.

Bei einer selbsttätigen Reinigung der Lamellen durch ihre Positionsänderung wird als Reinigungsmechanismus das Kräfte-Ungleichgewicht zwischen der Haftkraft der abgeschiedenen Feststoffe auf den Abscheideflächen und die Wirkung der Schwerkraft auf die abgeschiedenen Feststoffe ausgenutzt. Aus diesem Grund kann die Reinigungswirkung der Schwerkraft durch eine Minimierung der Haftkräfte verbessert werden, die von den Feststoffen und den Eigenschaften der Lamellen-Oberfläche abhängen. In einer Weiterbildung werden die Lamellen mit Nanopartikeln (Lotusblüten-Effekt) beschichtet, die eine Veränderung der Oberflächenpotentiale bewirken. Dadurch können beispielsweise gelöste, lipophile Stoffe in partikuläre Stoffe überführt und an den Lamellenoberflächen abgeschieden werden. Für die Lamellen können auch Kunststoffe verwendet werden, die eine spezielle, schuppenartige Oberflächenstruktur (Haifisch-Effekt) aufweisen. Durch diese Oberfläche werden die Grenzflächeneigenschaften besonders positiv beeinflusst, so dass die Haftkräfte in wässrigen Umgebungsmedien minimiert und die Feststoffablagerungen in der Reinigungsposition vorteilhafterweise leichter abgleiten.

Damit die abgeschiedenen Feststoffe nicht wieder resuspendiert werden, müssen sie in der Abscheideeinrichtung gesammelt und möglichst zeitnah ausgetragen werden. Bei Regenbecken im Nebenschluss und für Behälter muss ein zusätzliches Austragsorgan für die Feststoffe vorgesehen werden. In einer Weiterbildung des Verfahrens werden für den Feststoffeintrag robuste Förderelemente wie beispielsweise eine Pumpe mit Hardex-Förderrad oder eine Förderschnecke eingesetzt. Besonders vorteilhaft ist ein Förderelement, das keine bewegten Teile zur Förderung benötigt, wie beispielsweise ein Luftheber,

Bei Becken oder Behältern im Ableitungssystem, bei denen eine Abwirtschaftung, also ein Wechsel zwischen Füllen und Entleeren, erfolg kann die Abscheideeinrichtung mit einer hydraulischen Einrichtung zum Abtransport der Feststoffe versehen werden. Der Abtransport der abgeschiedenen Feststoffe erfolgt nach der Entleerung der Becken oder Behälter. Für die Reinigung dieser Becken eignen sich im besondern Maße hydraulische Einrichtungen, die einen Reinigongsschwall erzeugen, wie beispielsweise Spülkippen, klappenbehaftete oder klappenfreie Spülkammern sowie Spritzdüsenleisten. Bei diesen Verfahren erfolgt der Feststofftransport vorteilhafterweise durch die Schleppkraft der zugeführten Wasserenergie, so dass kein Verschleiß durch die mineralischen Partikel verursacht werden kann.

Vorteilhaft werden die abgeschiedenen Partikel unterhalb der Abscheideflächen gesammelt und durch ein Förderelement, beispielsweise eine Pumpe, eine Förderschnecke oder einem Luftheber, aus dem Behälter oder Becken ausgetragen. In weiterer Ausgestaltung oder zusätzliche werden die abgeschiedenen Partikel unterhalb der Abscheideflächen gesammelt und nach der Abwirtschaftung des Beckens oder Behälters durch eine Reinigungseinrichtung, beispielsweise eine Spülkippe, eine klappenlose Schwallreinigung oder eine Spritzdüsenleiste, aus dem Becken oder Behälter ausgetragen.

In einer Weiterbildung der Vorrichtung ist es vorteilhaft, durch die zuströmende Flüssigkeit eine Bewegung bzw. einen Hub eines Strömungskörpers zu bewirken, wobei die Strömungsgeschwindigkeit in eine Kraft umgewandelt wird. In der Fluidtechnik kann die Strömungsgeschwindigkeit mit geringem Aufwand durch einen Strömungskörper in einen Strömungsdruck umgewandelt werden, der bei einer verschiebbaren Anordnung des Körpers in eine Bewegung umgesetzt werden kann. Bei dieser Umwandlung durch den Strömungskörper ist es vorteilhaft, dass der Körper so ausgeführt wird, dass möglichst keine oder nur geringe Ablösewirbel entstehen, die einen zusätzlichen Verlust der Kraft verursachen würden. Die Druckkraft der strömenden Flüssigkeit kann durch ein Gehäuse, in dem der Körper geführt wird, erhöht werden. Bei der Gestaltung des Gehäuses ist darauf zu achten, dass der Staudruck möglichst gleichmäßig auf den Körper wirkt, damit dieser keinen zusätzlichen Momenten ausgesetzt wird (beispielsweise Dreh- oder Kippmomente).

Eine kostengünstige Weiterbildung der Steuereinrichtung besteht beispielsweise darin, ein Rohr als Gehäuse für den Körper einzusetzen, welches beim Durchströmen gleichzeitig den wesentlichen Vorteil einer radialsymmetrischen Verteilung der Druckkräfte bzw. des Druckverlustes hat. Bei diesem Aufbau führen die Druckkräfte nicht zu einer Rotation des Körpers, der die Druckkräfte aufnimmt. Der Körper zur Aufnahme der Druckkräfte sollte ebenfalls rotationssymmetrisch ausgeführt werden, damit auf ihn ebenfalls eine gleichmäßige Kraftverteilung stattfindet. Aus strömungstechnischer Sicht könnte der Körper zur Aufnahme der Druckkräfte eine tropfenförmige oder vereinfacht eine kegelförmige Form aufweisen und so in der Strömung angeordnet sein, dass die Verwirbelungsverluste minimiert werden. Zur Führung des Körpers kann das Gehäuse mindestens ein Führungselement, beispielsweise eine Nut oder ein U-Profil enthalten. Der Körper zur Aufnabme des Strömungsdruckes enthält ebenfalls ein Führungselement, wobei es vorteilhafterweise ein entsprechendes Gegenstück zum Führungselement des Gehäuses sein sollte, beispielsweise ein Stift oder eine Schiene, welche fest mit dem Körper verbunden sind. Die Kombination der beiden Führungselemente stellt eine lineare Führung für den Körper dar, der den auf ihn wirkenden Druckkräften in der Richtung der Linearführung ausweichen und so seine Position verändern kann.

In Ausgestaltung weist der Strömungskörper z.B. eine horizontal gelagerte Fläche auf, die gegenüber dem Gehäuse mindestens einen Spalt aufweist, so dass die feststoffbeladene Flüssigkeit den Spalt durchströmt und die dadurch entstehende Druckdifferenz zu einer Auslenkung der Fläche führt.

Um die Positionsänderung des Strömungskörpers auf die mindestens eine Abscheidefläche (Lamellen) zu übertragen, sind entweder seine Führungselemente oder der Körper direkt oder über ein Verbindungselement (beispielsweise über ein Kunststoffseil, das wiederum über eine Umlenkeinrichtung geführt sein kann) mit den Lamellen verbunden. Oder, falls eine Umwandlung (Über-/ Untersetzung) der Bewegung des Körpers notwendig ist, sind der Körper und die mindestens eine Abscheidefläche über eine Auslenkeinrichtung gekoppelt oder verbunden, die an ihrem anderen Ende mit einem weiteren Verbindungselement wiederum an den Lamellen befestigt ist.

Für eine Abfrage der Feststoffbeladung der Flüssigkeit durch einen mechanisch wirkenden Körper eignen sich Durchbrechungen in diesem, die sich in Abhängigkeit der Feststoffbeladung zusetzen können, um dadurch den Druckverlust proportional zu Beladung zu erhöhen und auszulenken. In einer Weiterbildung der Vorrichtung wird der Körper beispielsweise als ebene Platte ausgeführt, die beispielsweise schlitz- oder kreisförmige Durchbrechungen mit unterschiedlichen Durchmessern von 0,5 bis 5 mm aufweist. Während des Durchströmens des Körpers mit der zu reinigenden Flüssigkeit nimmt die freie Querschnittsfläche des Körpers immer weiter ab, so dass der Strömungsdruck immer größer wird und den Körper in seiner Führung immer weiter verschiebt. Der Körper ist ebenfalls mit einem Verbindungselement zur Ansteuerung der Lamellenposition versehen.

In Ausgestaltung der Steuereinrichtung werden vom Strömungskörper abgelagerte Feststoffe entfernt, indem beispielsweise eine Reinigungseinrichtung aktiviert wird, beispielsweise durch einen Stellmechanismus, die beispielsweise an der oberen und/oder unteren Verfahrposition des Körpers mit beispielsweise gegenläufigen Durchbrechungen oder Erhöhungen vorhanden ist, durch die die Fläche des Körpers gereinigt wird. Da die Feststoffe die Durchbrechungen des Körpers verstopfen, müssen sie am Ende eines Steuerungszyklus wieder aus den Durchbrechungen entfernt werden. Zu diesem Zweck ist mindestens eine Reinigungseinrichtung vorgesehen, die beispielsweise am oberen oder unteren Ende des Verfahrweges oder besonders vorteilhaft an beiden Enden des Verfahrweges angebracht ist. Die Reinigungseinrichtung kann im Falle des zuvor beschriebenen, beispielhaften Körpers aus einer Platte mit Stegen bestehen, auf denen Zapfen angebracht sind, die in die jeweiligen Durchbrechungen des Körpers passen. Erreicht der Körper die obere und/oder untere Endposition seines Verfahrweges, durchstoßen die Zapfen die Durchbrechungen und entfernen so die Feststoffablagerung aus dem Körper.

In Ausgestaltung setzt die Auslenk- bzw. Umlenkeinrichtung eine Erniedrigung oder Erhöhung der Ist-Signale oder Werte (Strömungsgeschwindigkeit, Flüssigkeitspegel, Feststoffbeladung, Trübung - s.o.) der Steuereinrichtung auf mechanischem, elektrischem, pneumatischem oder hydraulischem Wege um. Beispielsweise umfasst die mechanische Auslenk- bzw. Umlenkeinrichtung einen asymmetrisch wirkenden Hebel, bei dem die Steuereinrichtung für eine Übersetzung mit dem kleineren Hebelteilstück und bei einer Untersetzung mit dem größeren Hebelteilstück verbunden ist; Oder diese umfasst eine Kurvenscheibe mit veränderlichem Durchmesser; Oder eine elektrische Auslenk- bzw. Umlenkeinrichtung umfasst beispielsweise einen Stellantrieb. Eine pneumatische sowie hydraulische Auslenk- bzw. Umlenkeinrichtung umfasst beispielsweise einen Verfahrkolben.

Vorteilhaft ist das Steuerelement bei hydraulischen Verweilzeiten von etwa 5 min so angeordnet ist, dass die Steuerungscharakteristik der Lamellen voreilend und bei einer hydraulischen Verweilzeit von wesentlich mehr als 5 min so angeordnet ist, dass die Steuerungscharakteristik der Lamellen nacheilend ist.

Eine andere, kostengünstige Weiterbildung des Körpers zur Aufnahme der Strömungsdruckkräfte besteht aus mindestens einer einseitig gelagerten Platte, die im Gehäuse der Steuereinrichtung beweglich gelagert ist. An mindestens einer Seitenfläche der Platte, vorzugsweise gegenüber dem Lager, ist mindestens eine Zunge vorhanden, die über Verbindungselemente an den Lamellen befestigt ist. Zwischen Platte und Gehäuse besteht mindestens ein Spalt, durch den die feststoffbeladene Flüssigkeit strömen kann. In Abhängigkeit des zuströmenden Volumenstroms variiert die Druck- und damit die Verstellkraft für die Platte. Die Auslenkung der Platte erfolgt um den Drehpunkt der Lagerung und die Rückstellung erfolgt über die Gewichtskraft der Lamellen.

Vorzugsweise weist die Steuereinrichtung, durch die mindestens ein Teilstrom der feststoffbeladenen Flüssigkeit strömt, ein vorzugsweise zylinderförmiges Gehäuse, beispielsweise ein Rohrstück, und mindestens ein Führungselement auf, wie beispielsweise eine Nut oder einen U-förmigen Kanal, in dem ein verschiebbarer Körper, der mindestens ein Führungselement besitzt, angeordnet ist und an mindestens einem Ende des Körpers oder des Führungselements des Körpers mit mindestens einer Auslenk- bzw. Umlenkeinrichtung und/oder mit den Abscheideflächen über eine Verbindungselement verbunden ist.

Für die Positionierung der Abscheideflächen bzw. Lamellen innerhalb der Abscheideeinrichtung muss eine Kraft aufgewendet werden, die durch den Staudruck, welcher an dem Körper in der Steuereinrichtung angreift, erzeugt wird. Diese Kraft kann, wie schon zuvor beschrieben, entweder unmittelbar oder mittelbar auf die Abscheideflächen wirken. Bei der mittelbaren Wirkung werden zur Übertragung der Kraft von der Steuereinrichtung zu den Lamellen konstruktive Komponenten wie Verbindungselemente oder Umlenk- und/oder Auslenkeinrichtungen bzw. eine Kombination aus Umlenk- und Auslenkeinrichtung benötigt.

Um die Trägheit der Bewegungsübertragung zwischen Steuereinrichtung und Lamellen zu minimieren, sollten die Verbindungselemente möglichst ein geringes Gewicht aufweisen. Um dies, wie in einer Weiterbildung beschrieben, zu ermöglichen, sollte der Kraftverlauf zwischen Steuereinrichtung und Lamellen so gewählt werden, dass in den Verbindungselementen überwiegend nur Zugkräfte auftreten, da fast alle Werkstoffe hohe Zugspannungen bei geringen Werksnickabmessungen übertragen können, so dass beispielsweise ein Seil als Verbindungselement verwendet werden kann.

Die wesentliche Funktion der Umlenkeinrichtung besteht darin, den Kraftfluss in den Verbindungselementen so zu lenken, dass in diesen überwiegend nur Zugkräfte auftreten. Die Umlenkeinrichtung bzw. Umlenkeinrichtungen können beispielsweise aus Rollen bestehen, in denen das Verbindungselement geführt und die Kraft immer nur in Achsrichtung des Verbindungselements wirkt.

Die Auslenkeinrichtung hat zusätzlich zur Umlenkeinrichtung noch die Funktion, die Bewegung zwischen Steuereinrichtung und Lamellen zu verändern. Dabei wird vorteilhafterweise bei niedriger Flüssigkeitszufuhr mit hoher Feststoffbeladung die Bewegung durch die Auslenkeinrichtung vergrößert, um dadurch die horizontal projizierte Abscheidefläche an die hohen Feststoffanteile anzupassen, und bei hoher Flüssigkeitszufuhr mit niedriger Feststoffbeladung die Bewegung verkleinert, um die Turbulenzen durch die Lamellenpositionierung zu minimieren. Eine kostengünstige Lösung für ein Auslenkelement besteht in einem asymmetrisch wirkenden Hebel, wobei die Asymmetrie beispielsweise durch eine außermittige Lagerung oder durch unterschiedlich lange Hebelteilstücke realisiert werden kann.

Eine Kombination aus Umlenk- und Auslenkeinrichtung kann beispielsweise durch eine Kurvenscheibe verwirklicht werden, deren Durchmesser in Bewegungsrichtung kontinuierlich zunimmt, um die Bewegung zu vergrößern, oder deren Durchmesser in Bewegungsrichtung kontinuierlich annimmt, um die Bewegung zu verkleinern. Gemäß einer ganz besonders vorteilhaften Ausgestaltung oder bei der Abscheideeinrichtung ist die Oberfläche der Abscheidefläche bzw. der Abscheideeinrichtung zumindest teilweise mit einer Funktionsschicht überzogen. Bei dieser Ausführung ist es nicht erforderlich, dass die Abscheideeinrichtung oder die Abscheidefläche bewegt wird, diese können auch feststehend oder durch eine andere Einrichtung als die Steuereinrichtung bewegbar sein. Die Funktionsschicht ist eine strukturierte Schicht, eine Antihaftschicht, eine biologisch wirksame Schicht und/oder eine chemisch wirksame Schicht. Oder vorteilhaft mindestens eine Schicht, die eine Kombination von einen oder mehrere dieser Punktionen aufweist In Ausgestaltung ist die Oberfläche der Lamellen zumindest teilweise mit Nano-Partikeln beschichtet bzw. das Material für die Lamellen ist so gewählt, beispielsweise mit bzw. aus Polytetraflouretyhlen, dass die Adhäsionskräfte zwischen den Stoffen in der zu reinigenden Flüssigkeit und den Lamellen minimiert sind Dadurch wird die Reinigung der Lamellenoberfläche durch die Schwerkraft unterstützt bzw. die Ablagerungen können selbsttätig abrutschen.

In weiterer alternativer oder ergänzender Ausgestaltung ist die Oberfläche der zumindest einen Abscheidefläche (z.B. Lamellen bzw. das Material für die Lamellen) mit einer biozid-wirkenden Substanz, beispielsweise mit Silberionen, beschichtet bzw. dotiert wird, um einen mikrobiellen Bewuchs auf der Oberfläche der Lamellen zu minimieren bzw. zu verhindern.

Beispielsweise ist die strukturierte Oberfläche eine Beschichtung mit Partikeln in Nanogröße, wobei die Partikel biologisch und/oder chemisch aktive Partikelbestandteile umfassen oder aus diesen gebildet sind. Durch die so genannten Nanopartikel wird die Oberflächeneigenschaft (z.B. Lotus-Effekt) beeinflusst. Durch diesen Effekt werden im Wesentlichen die Haftkräfte zwischen Oberflächen und Ablagerungen verändert und auch die Strömung entlang der Oberfläche wird modifiziert, z.B. das Abgleiten von Fluidschichten. Beide Effekte können in einer Weiterbildung der Vorrichtung zur verbesserten Reinigung der Abscheideflächen verwendet werden. Durch die Veränderung der Oberflächenpotentiale werden die Haftkräfte zwischen den Ablagerungen und der Abscheidefläche minimiert und durch die Beeinflussung der Grenzschichtkräfte ein Abgleiten der Ablagerung in der Reinigungsposition begünstigt. Zur Verbesserung des Abgleitens in der Reinigungsposition kann die Oberflächenstruktur schuppenförmig ausgebildet sein.

Die Abscheidung von Feststoffen aus einer Flüssigkeit wird wesentlich durch die Eigenschaften der Suspension beeinflusst. Ab einem Partikeldurchmesser von 150 µm kann die Suspension als stabil angesehen werden, so dass ausschließlich durch ebene Flächen keine Abscheidung mehr erzielt werden kann. Diese Suspensionen mit hohen Schluffanteilen und damit verbunden mit Partikelgrößen kleiner als 150 µm liegen aber gerade im Bereich der Niederschlagswasserversickerung vor. Deshalb wird in einer anderen Weiterbildung des Verfahrens der kompositäre Aufbau der Abscheideflächen dargelegt, wobei der Kompositaufbau der Abscheideflächen trennbar oder untrennbar erfolgen kann. Zur effizienten Abscheidung von gelösten Stoffen wird mindestens eine Abscheidefläche aus einem Kompositmaterial verwendet, welche mindestens an einer Seite, bevorzugt an ihrer Unterseite bezogen auf die Horizontale, befestigt ist, und mindestens eine Trägerschicht, die aufgrund ihrer physikalisch-chemischen Eigenschaften in der Lage ist, partikuläre Kleinstanteile und/oder gelöste Stoffe aus der Flüssigkeit aufzunehmen.

Der Vorteil des trennbaren Aufbaus besteht in der nachträglichen Anpassung der Abscheideflächen an veränderte Feststoffzusammensetzungen in der Flüssigkeit. Der Vorteil der untrennbaren Lösung liegt in dem montagefreundlicheren Einbau dieser Abscheideflächen besonders bei überdeckten Bauwerken. Die mindestens zwei Teilflächen des Kompositaufbaus unterscheiden sich besonders in ihren Oberflächenstrukturen. Die in vertikaler Richtung obere Abscheidefläche weist eine glatte Struktur auf, um alle Partikel, deren Lage in der Suspension instabil ist, abzuscheiden. Die weitere Abscheidefläche weist eine strukturierte Oberfläche, wie beispielsweise Geotextilien, auf, um die stabil in der Suspension vorliegenden Partikel abscheiden zu können.

Der Abscheidevorgang für die stabile Suspension wird am Beispiel der Geotextilien näher erläutert. Die Geotextilien bestehen aus unterschiedlichen Fasern, beispielsweise aus Polypropylen, die miteinander verwebt, vernadelt oder verfilzt sind. Dadurch besitzt eine Fläche aus Geotextilien eine große, spezifische Oberfläche, und durch das besondere Herstellungsverfahren weist das Material einen hohen Sperreffekt wie bei einem Filter mit geringen Druckverlusten auf. Bei dem eigentlichen Abscheidevorgang wird diese Fläche mit der stabilen Suspension angeströmt bzw. durchströmt, wobei die Partikel an den Fasern der geotextilen Abscheideflächen durch Adhäsionskräfte und/oder durch den Sperreffekt des Gewebes aus der Flüssigkeit abgeschieden werden.

Durch einen kompositären Aufbau der Abscheideflächen können überwiegend nur partikuläre Stoffe aus der Flüssigkeit abgeschieden werden. In vielen zu behandelnden Flüssigkeiten sind aber auch gelöste Stoffe vorhanden, wie beispielsweise Schwermetalle, Nitrat, Nitrit, Chlorid, Sulfat, organische Verbindungen sowie metallorganische Verbindungen usw. im Niederschlagswasser. Um diese Stoffe zu entfernen, muss die Abscheidefläche mindestens eine aktive Schicht aufweisen, beispielsweise eine Geotextil-, Kunststoff- oder Schaumstoff-Schicht. Diese Schichten können wiederum lösbar oder unlösbar miteinander verbunden sein. Die Aktivierung der weiteren Abscheidefläche kann beispielsweise für die Entnahme von organischen Verbindungen aus der Flüssigkeit durch Aktivkohle oder Aktivkoks erfolgen. Die unterschiedlichen Ionengruppen können durch natürliche oder synthetische Ionenaustauschermaterialien aus der Flüssigkeit entfernt werden. Das Einbringen der Aktivierungsmaterialien in die aktive Schicht kann durch die Ummantelung der Fasern, durch Einschmelzen oder durch Ausfüllen des porigen Grundmaterials mit diesen aktiven Stoffen erfolgen. Sollen überwiegend nur gelöste Partikel entfernt werden, können die Abscheideflächen unter einem festen Winkel installiert werden, wobei dieser Winkel etwa dem Böschungswinkel der Ablagerungen entsprechen sollte.

Durch die Anordnung des Strömuugskörpers, beispielsweise im Zulauf der Becken bzw. Behälter, kann die Steuerungsstrategie beeinflusst werden. Bei der Anordnung im Zulauf wird eine voreilende und im Ablauf eine nacheilende Steuerungscharakteristik erzielt. Die voreilende Steuerungscharakteristik sollte bei kleinen Speichervolumina und hohen Volumenströmen eingesetzt werden, so dass für die Feststoffabscheidung direkt zu Beginn der Füllphase oder des Tagesganglinienhochs die größtmögliche Abscheidefläche zur Verfugung steht. Bei großen Speichervolumina und kleinen Volumenströmen sollte die nacheilende Steuerungscharakteristik eingesetzt werden, um durch den Sedimentationsprozess während der Füllphase bzw. während der Durchströmung der Abscheideeinrichtung eine Vorreinigung zu erzielen und so die spezifische Flächenbelastung der Lamellen zu erniedrigen bzw. bei unveränderter Flächenbelastung mit einer geringeren Anzahl an Lamellen den gleichen Feststoffwert im Ablauf zu erzielen.

In Ausgestaltung des Verfahren oder der Vorrichtung weist die Steuereinrichtung einen perforierten Durchströmkörper auf, dessen Durchbrechungen wahren des Durchströmens mit der feststoffbeladenen Flüssigkeit durch die Feststoffe teilweise oder vollständig geschlossen werden. Dies begünstigt den Aufbau einer Druckdifferenz, die zu einer Bewegung des Durchströmkörpers führt die wiederum zu einer Veränderung der Position der Abscheideflächen verwendet wird.

In weiterer Ausgestaltung weist die Steuereinrichtung einen Kanal auf, in dem die feststoffbeladene Flüssigkeit an einer Öffnung eines Verbindungselements vorbeiströmt, wobei die Verbindung beispielsweise ein Rohr sein kann, welches an einer Seite einer Druckdose, die mindestens zwei Druckräume besitzt, endet und deren Druckräume durch eine elastische Membran getrennt sind, wobei der zweite Druckraum beispielsweise mit dem Umgebungsdruck verbunden ist, so dass je nach Strömungsgeschwindigkeit im Kanal eine Druckdifferenz in der Druckdose erzeugt und dadurch eine Auslenkung der Membran verursacht wird, die zur Veränderung der Position der Abscheideflächen verwendet wird.

Ein Verbindungselement zwischen der Steuereinrichtung und der Abscheideeinrichtung ist beispielsweise eine Kette, ein Seil oder Gestänge, sowie eine Auslenk- bzw. Umlenkeinrichtung, die beispielsweise aus einem asymmetrisch wirkenden Hebel besteht, welche die Veränderung der Steuereinrichtung vergrößert und zur Positionsandenmg auf die Abscheideflächen der Abscheideeinrichtung überträgt.

Für einen Einsatz der Abscheideeinrichtung in der Abwasserreinigung sind neben den partikulären mineralischen Feststoffen auch noch Leichtstoffe, wie beispielsweise Fette und Öle, sowie faserige, zumeist organische Feststoffe in der Flüssigkeit enthalten. Um diese Stoffe aus der Flüssigkeit zu entfernen, ist es vorteilhaft, die Abscheideinrichtung gemäß Ansprüche 8 in einer Abscheideanordnung mit mindestens einer mechanischen Vorreinigungsstufe, wie beispielsweise einem Rechen, und/oder mindestens einer weiteren Stufe für die Abscheidung von emulgierten und/oder koagulierten lipophilen Stoffen zu kombinieren. Durch die mechanische Vorreinigungsstufe können je nach Größe deren Durchbrechungen die faserigen und/oder stückigen, zumeist organischen Feststoffe aus der Flüssigkeit entfernt werden. Die Stufe für die Abscheidung der Lipide und lipoiden Stoffe kann beispielsweise wie ein Fettfang aufgebaut sein, in den beispielsweise Luft eingeblasen wird, um die mittlere Dichte herabzusetzen und die Oberflächenspannung der Flüssigkeit zu verändern, so dass diese Stoffe an die Flüssigkeitsoberfläche aufschwimmen und entfernt werden können. Die Anordnung der mindestens drei Stufen ist beliebig und richtet sich nach den Anteilen an den unterschiedlichen Feststofffraktionen der zu behandelnden Flüssigkeit. In der Abwasserreinigung könnten die Stufen aufgrund der allgemeinen Abwasserzusammensetzung beispielsweise in der Reihenfolge mechanische Vorreinigung, Fettfang und Abscheideeinrichtung eingesetzt werden.

Vorteilhaft wird die Abscheideeinrichtung mit mindestens einer Stufe zur Abtrennung von gelösten und/oder ungelösten Lipiden bzw. lipoiden Stoffen verwendet, deren Abtrennleistung beispielsweise durch eine Erniedrigung der mittleren Dichte der Flüssigkeit, beispielsweise durch den Eintrag von Luft über eine Belüftungsleiste, erhöht wird, und/oder mit mindestens einer Stufe zur Abtrennung von Grobstoffen kombiniert wird, die überwiegend partikuläre Stoffe mit einem größeren Äquivalentdurchmesser als die Abscheideeinrichtung abtrennt, beispielsweise durch einen Rechen, wobei die Anordnung der einzelnen Stufe vor oder nach der Abscheideeinrichtung erfolgen kann.

In weiterer Ausgestaltung ist die Abscheideeinrichtung mit mindestens einer Stufe zur Abtrennung bzw. zum Rückhalt von gelösten Molekülen und/oder suspendierten Mikroorganismen bzw. Mikroorganismen-Agglomeraten kombiniert, wobei die Abtrennung bzw. der Rückhalt beispielsweise durch Membranen erfolgen kann.

In der Abwasserreinigung wird sehr häufig das so genannte Belebungsverfahren zur Reinigung der Flüssigkeit eingesetzt. Das Belebungsverfahren zeichnet sich dadurch aus, dass suspendierte Mikroorganismen in einem Behälter oder Becken mit gelösten und/oder partikulären Flüssigkeitsinhaltsstoffen in Kontakt kommen und diese auf biochemischem Wege umsetzen. Um diesen Prozess permanent aufrecht zu erhalten, müssen die Miroorganismen am Ende des Reinigungsverfahrens wieder aus der Flüssigkeit abgetrennt werden. Diese Abtrennung ist sehr kostenintensiv, da sie in speziellen, großvolumigen Becken, so genannten Nachklärbecken, erfolgt. Durch den Einsatz der Abscheideeinrichtung können diese Becken verkleinert und dadurch das gesamte Verfahren kostengünstiger durchgeführt werden.

Für eine Kombination der Abscheideeinrichtung mit einem Membranverfahren, wie in einer Weiterbildung ausgeführt, kann die Flüssigkeit sogar bis in den molekularen Bereich von Schadstoffen und Mikroorganismen gereinigt werden. Über die Porenbereiche der Membranen kann die Reinigungswirkung und Durchsatzleistung festgelegt werden. Die Anordnung der beiden Stufen (Abscheideeinrichtung und Membranen) ist beliebig, wobei vorzugsweise mit der Abscheideeinrichtung die Feststoffe im makroskopischen Bereich und anschließend durch die Membran im mikroskopischen Bereich entfernt werden sollten.

Im Folgenden wird die Erfindung anhand von zeichnerischen Darstellungen erläutert. Es zeigen:
- Fig. 1A und 1B: eine Abscheideeinrichtung mit einer Steuereinrichtung, einem Verbindungselement und einer Umlenkeinrichtung zur Steuerung der Reinigungsstellung (Fig. 1A) und Abscheidestellung (Fig. 1B) von Abscheideflächen,
- Fig. 2: eine Prinzipdarstellung einer Abwandlung der Einrichtung von Fig. 1A mit einem asymmetrisch gelagerten Hebel als Auslenkeinrichtung,
- Fig. 3: eine Prinzipdarstellung einer Abwandlung der Einrichtung von Fig. 1A mit einer Kurvenscheibe als kombinierte Umlenk- und Auslenkeinrichtung,
- Fig. 4A und 4B: Prinzipdarstellungen einer ersten und zweiten Variante einer weiteren, kombinierten Steuer-/Abscheideeinrichtung mit zwei unterschiedlichen konstruktiven Ausführungen,
- Fig. 5A und 5B: eine Seitenansicht und eine Draufsicht einer Steuereinrichtung mit einem ringförmigen Strömungskörper zur Umwandlung des Strömungsdrucks in eine Lamellenausrichtung,
- Fig. 6A und 6B: eine Seitenansicht und eine Draufsicht einer weiteren Ausgestaltung einer Steuereinrichtung mit einer einseitig gelagerten Platte als Strömungskörper zum Aufbau des Strömungsdrucks,
- Fig. 7: eine Prinzipdarstellung einer Kompositausführung der Abscheideflächen in unlösbarer Ausführung,
- Fig. 8: eine Prinzipdarstellung einer Kompositausführung der Abscheideflächen in lösbarer Ausführung,
- Fig. 9A bis 9C: verschiedene Kompaktmodule mit einer Abscheideeinrichtung im Kombination mit einem Grobstoff- und Fettabscheider, und
- Fig. 10: eine weitere Ausführungsform der in Fig. 1A und 1B dargestellten Abscheideeinrichtung mit einem als Schwimmer ausgebildeten Strömungskörper.

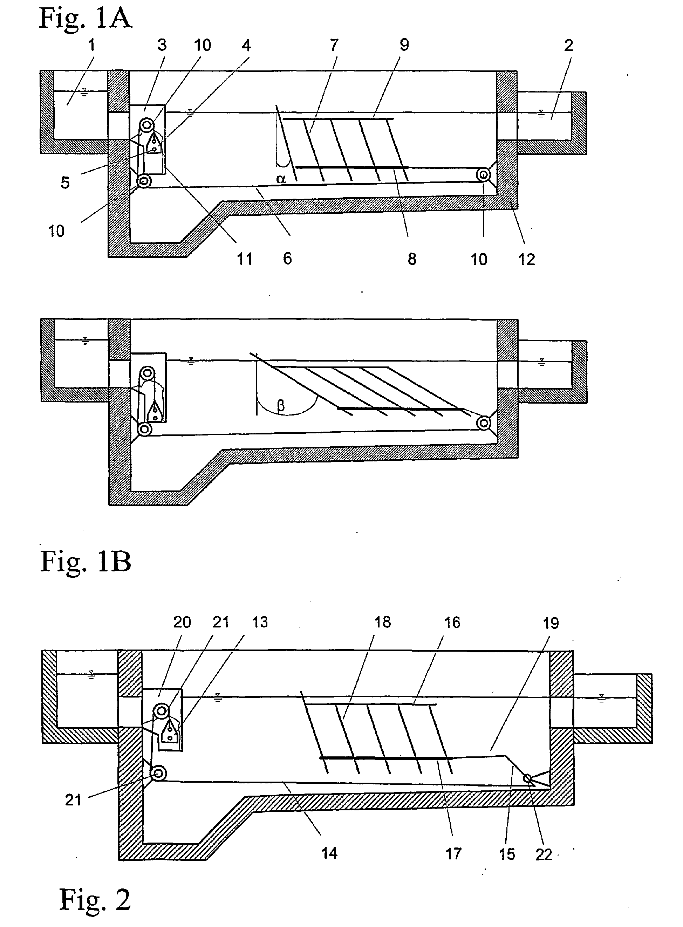

Fig. 1A und 1B zeigen das Verfahrens- und Vorrichtungsprinzip einer Abscheideeinrichtung 9, die sich in einem Becken 12 befindet. Die Steuerung bzw. Einstellung der Abscheideflächenposition bzw. -ausrichtung von Abscheideflächen 7 der Abscheideeinrichtung 9 erfolgt durch eine Steuereinrichtung 11, die ein Gehäuse 3 aufweist, in dem ein Strömungskörper 4 mit seinen Führungselementen 5 angeordnet ist. In einem Zulauf 1 zum Becken 12 wird die zugeführte, feststoffbeladene Flüssigkeit durch die Zulauföffnung in die Steuereinrichtung 11 geleitet und durch den Strömungskörper 4 ein Staudruck erzeugt. Um diesem Druck auszuweichen, verändert der Strömungskörper 4 seine Position innerhalb der Steuereinrichtung 11. Diese Bewegung des Strömungskörpers wird über Führungselemente 10 an ein Verbindungselement 6 weitergegeben. Das Verbindungselement 6 erfährt durch die Verschiebung des Strömungskörpers eine Zugkraft, die durch die Umlenkelemente 10 bis zu den Abscheideflächen 7 umgelenkt wird. Ausgehend von der in Fig. 1A gezeigten Stellung (Reinigungsposition) wird bei zunehmender Strömung bzw. zunehmendem Strömungsdruck der eingeleiteten Flüssigkeit der Winkel α der Abscheideflächen 7 (Lamellen) in der Pos. 1 vergrößert, so dass in der in Fig. 1B gezeigten Ausrichtung (Abscheideposition) die Lamellen 7 den Winkel β gegenüber der Senkrechten einnehmen.

In Ausgestaltung kann der Winkel α kleiner oder sogar negativ sein, beispielsweise im Bereich ±10°, vorzugsweise ± 5°, um die Vertikale liegen. In maximaler Auslenkung liegt der Winkel β vorzugsweise im Bereich 30° bis 90° gegenüber der Vertikalen, vorteilhaft im Bereich 40° bis 60°. In Ausgestaltung ist der Hub bzw. der Drehwinkel der Abscheideeinrichtung 9 in der Reinigungsstellung und/oder in der Abscheidestellung durch einen Anschlag begrenzt. Die Steuereinrichtung kann so eingestellt sein, dass die Abscheideeinrichtung nahezu binär zwischen der Reinigungsposition und der Abscheideposition hin- und zurückschwenkt, sobald ein Grenzwert der Durchflussgeschwindigkeit der zufließenden Flüssigkeit überschritten ist. Oder die Stellung der Lammellen 7 ändert sich kontinuierlich bzw. stetig in Abhängigkeit der Durchflussgeschwindigkeit. Diese Ausgestaltungen sind entsprechend auch bei den im Folgenden beschriebenen Abscheideeinrichtungen ohne weiteres anwendbar.

Die Lamellen sind in der Abscheideeinrichtung 9 an ihrem oberen Ende drehbar gelagert und an ihrem unteren Ende durch eine Haltestange 8 miteinander verbunden. Nachdem die feststoffbeladene Flüssigkeit nach dem Durchströmen der Abscheideeinrichtung 9 von den Festsstoffen gereinigt ist, verlässt sie das Becken über einen Ablaufkanal 2.

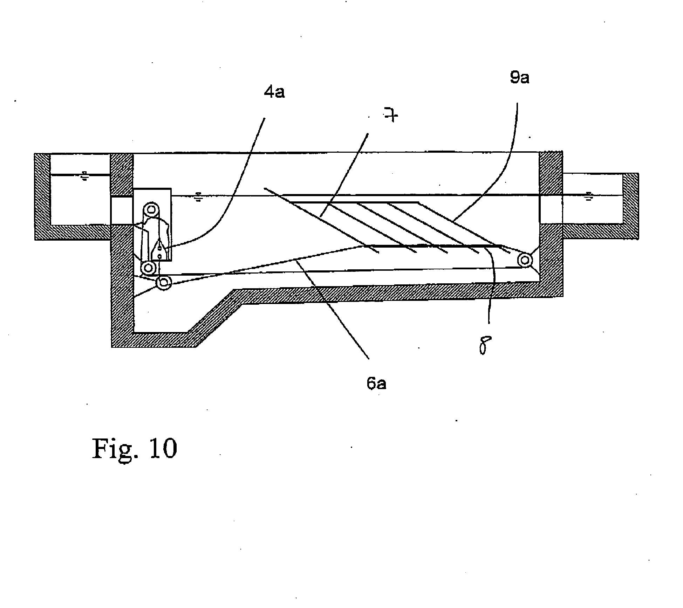

Fig. 10 zeigt eine Abscheideeinrichtung 9a in Ausgestaltung der in Fig. 1A und 1B dargestellten Abscheideeinrichtung 9. Hier ist anstelle des Strömungskörpers 4 ein Strömungskörper 4a eingesetzt, der als Schwimmer ausgebildet ist, also in Wasser einen Auftrieb erfährt. Damit nimmt der Strömungskörper 4a neben der strömungsbetätigten Auslenkung der Abscheideeinrichtung 9a die zumindest unterstützende Funktion der Rückstellung der Abscheideeinrichtung 9a bzw. der Abscheideflächen 7 bei nachlassender Strömung ein. Die Rückstellkraft bei Auftrieb des Strömungskörpers 4a überträgt ein zweites Verbindungselement 6a (über Umlenkelemente verlaufendes Seil), dessen eines Ende mit dem Strömungskörper und dessen anderes Ende mit der Abscheideeinrichtung 9a verbunden ist. Ansonsten entsprechen die anderen dargestellten Elemente den in Fig. 1A und 1B dargestellten Elementen.

Wie zuvor beschrieben, sind die einzelnen Lamellen 7 mit einem Verbindungselement 8 (hier Stange) verbunden, so dass es genügt wenn das zweite Verbindungselement mit einer der Lamellen oder mit der dem Verbindungselement verbunden ist. Durch den Flüssigkeitsdruck weicht der Strömungskörper 4a aus und überträgt seine Stellung bzw. Auslenkung über das erste Verbindungselement 6a auf die Lamellen 7. Nimmt der Flüssigkeitsdruck ab, wird durch die geringere mittlere Dichte des Strömungskörpers 4a gegenüber der umgebenden Flüssigkeit eine Auftriebskraft erzeugt, die eine Rückstellung der Lamellen über das zweite Verbindungselement 6a bewirkt.

Eine ähnliche Ausführung zeigt Fig. 2, wobei die Umlenkeinrichtung der Fig. 1A durch eine Auslenkeinrichtimg 15 ersetzt ist, die eine außermittige Lagerung 22 aufweist, und bei der ein zweites Verbindungselement 19 verwendet wird, das mit den Lamellen 18 über die Haltestange 17 (vgl. Haltestange 8) verbunden ist. Durch die unterschiedlichen Teilhebel der Auslenkeinrichtung 15 wird eine kleine Änderung der Bewegung des Strömungskörpers 13 (vgl. Strömungskörper 4) in eine deutlich größere Positions- bzw. Ausnchtungsänderung der Lamellen übersetzt.

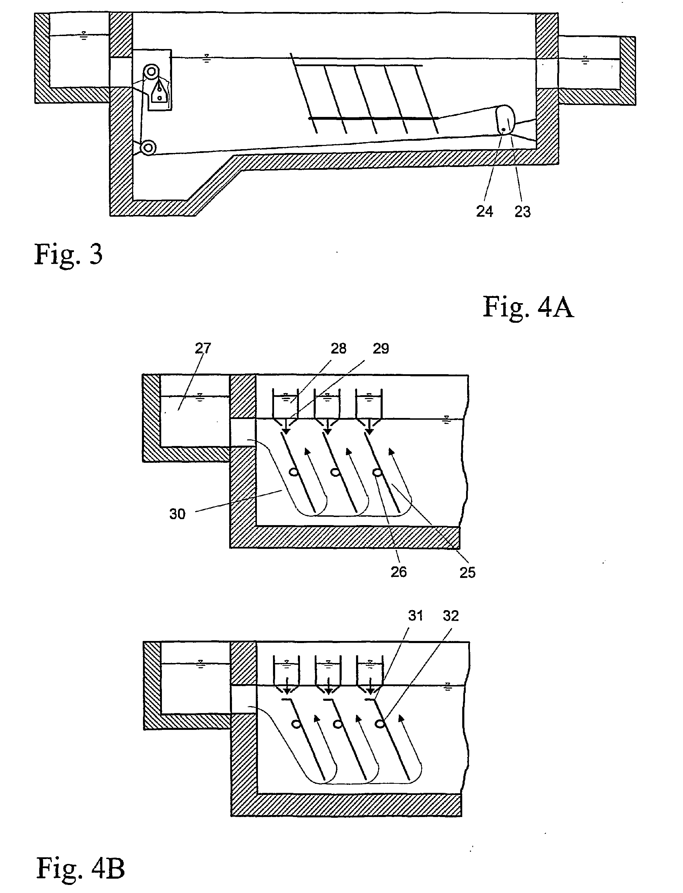

Fig. 3 zeigt weitere Ausgestaltung der Abscheideeinrichtung in Reinigungsstellung, bei der eine Kombination aus einer Umlenk- und Auslenkeinrichtung in Form einer Kurvenscheibe 23 mit einem Lager 24 vorgesehen ist. Das Lager 24 ist so an der Kurvenscheibe 23 angeordnet, dass die Auslenkung des Strömungskörpers 4 kontinuierlich durch die zunehmende Übersetzung in eine zunehmende Auslenkung der Lamellen umgesetzt wird, bis die Lamellen ihre maximale Abscheideposition erreicht haben (vgl. Fig. 1B).

In Fig. 4A und 4B sind zwei Varianten einer kombinierten Steuereinrichtung-Abscheideeinrichtung dargestellt, wobei der überwiegende Teil der feststoffbeladenen Flüssigkeit über ein Zulaufgerinne 27 dem Becken bzw. der Abscheideeinrichtung zugeführt wird Die Abscheideeinrichtung in der Variante der Fig. 4A umfasst einzelne Steuereinrichtung-Abscheideflächen-Segmente 25, die an ihrer oberen Teilfläche über Verteilungsgerinne 28 mit feststoffbeladener Flüssigkeit 29 angeströmt werden. Dadurch bildet sich ein Strömungsdruck auf die oberen Flächenanteile der Segmente 25. Somit wirkt jedes der Segmente 25 auch als Steuereinrichtung zur Änderung der Ausrichtung der Winkelstellung der Segmente in Abhängigkeit von der über die Verteilungsgerinne 28 zufließende Flüssigkeit. Der Strömungsdruck führt zu einer Positionsänderung der Segmente, da sie mittels eines Drehlagers 26 drehbar bzw. schwenkbar gelagert sind. Der überwiegende Teil der feststoffbeladenen Flüssigkeit verteilt sich während der Durchströmung der Segmente 25 in etwa wie es die Strombahn 30 zeigt. Die Rückstellung der Segmente erfolgt schwerkraftbetätigt über die Gewichtskraft der unterhalb des Drehpunktes vorhanden Abscheide-Teilflächen, die ein größeres Gewicht als die oberhalb angeordneten Teilflächen aufweisen.

Bei der in Fig. 4B dargestellten Variante dient das angewinkelte Flächenteilstück 31 als Steuereinrichtung. Die Anströmung erfolgt wie bei der Variante der Fig. 4A, jedoch können die unterhalb des Drehpunktes 32 angeordneten Abscheideteilflächen vergrößert werden, da das Drehmoment, welches der Strömungsdruck auf die Steuerflächen 31 erzeugt, durch die Abwinkelung des Flächenteilstückes 31 gegenüber der Variante in Fig. 4A vergrößert ist.

In Ausgestaltung wird nur eine oder ein Teil der Abscheideflächen bzw. Lamellen angeströmt und die übrigen Abscheideflächen oder Lamellen der Abscheideeinrichtung sind mit den angeströmten mechanisch gekoppelt, so dass alle Lamellen die Schwenkbewegung der angeströmten Lamellen mit ausführen.

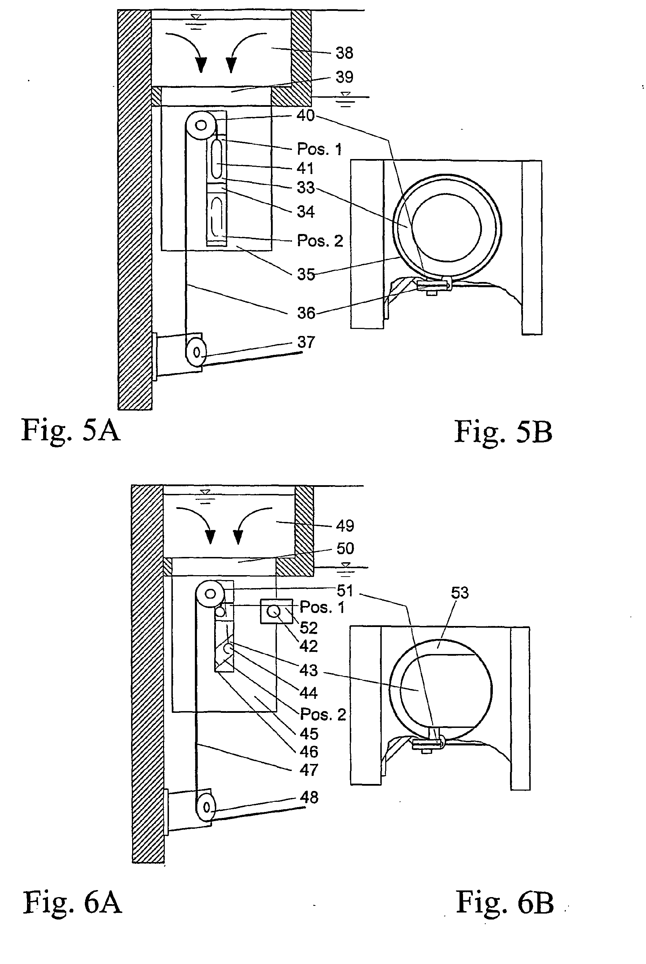

Fig. 5A und 5B zeigen im Detail eine Seitenansicht (5A) und eine Draufsicht (5B) einer Steuereinrichtung für die Abscheideeinrichtung. Die Steuereinrichtung der Fig. 5A weist ein Gehäuse 35 auf, in dem als Führungselement eine Nut 34 für einen ringförmigen Strömungskörper 33 angeordnet ist. Die zugeführte feststoffbeladene Flüssigkeit 38 wird durch eine Zufuhröffnung 39 in das Gehäuse 35 der Steuereinrichtung geleitet. Ein längliches Führungselement 41 des Strömungskörpers 33 greift in die Nut 34 ein, so dass eine Verdrehung des Strömungskörpers verhindert wird. Das Führungselement 41 des Strömungskörpers ist mit dem Verbindungselement 36 verbunden. Durch die Flüssigkeitszufuhr wird eine Kraft auf den Strömungskörper 33 ausgeübt, so dass er von seinem oberen Anschlag (Pos. 1) eine maximale Bewegung bis zum unteren Anschlag (Pos. 2) vollführen kann. Diese Bewegung wird über ein Verbindungselement 36 (vgl. 6 in Fig. 1A) auf die Abscheideflächen 7 (Lamellen) übertragen. Umlenkelemente 40 und 37 führen das Verbindungselement, das hier ein Seil ist, das eine Zugkraft zur Änderung der Lamellenpositionen mit eintretender Strömung überträgt und das zur Rückstellung des Strömungskörpers 33 mit nachlassender Strömung die schwerkraftbedingte Rückstellung der Lamellen in die Reinigungsstellung nutzt.

Fig. 6A und 6B zeigen eine Seitenansichtung und Draufsicht einer zur Fig. 5A ähnlichen Steuereinrichtung, wobei als Strömungskörper eine einseitig gelagerte Platte 43 vorgesehen ist. Die drehbare Lagerung der Platte übernimmt ein Bolzen 42, der in einem Lagergehäuse 52 befestigt ist. Durch die Anordnung des Führungselements 44 der Platte wird die obere (Pos. 1) und untere (Pos. 2) Anschlagposition und damit die maximale Bewegung innerhalb des Führungselements 46 des Gehäuses 45 festgelegt. Durch die Bewegung der Platte 43 verändert sich deren Anstellwinkel im Gehäuse 45 und dadurch der Spalt 53 für die durchströmende, feststoffbeladene Flüssigkeit 49. Durch diese Kombination des Strömungskörpers 43 und der Gehäuseform kann eine spezifische Steuerungscharakteristik erzeugt werden, die auf jede zu reinigende, feststoffbeladene Flüssigkeit individuell angepasst werden kann.

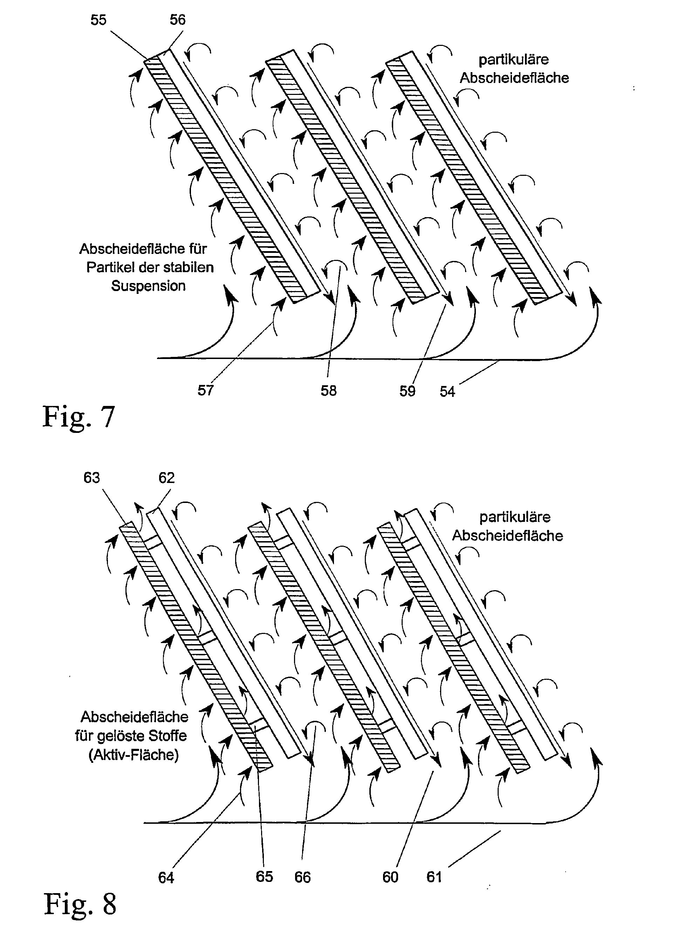

Die Fig. 7 und Fig. 8 zeigen den schematischen Aufbau einer Komposit-Abscheidefläche. In der Fig. 7 ist die strukturierte Oberfläche 55, die zur Abscheidung der in einer stabilen Suspension vorliegenden Partikel 57 dient, fest mit der glatten Oberfläche 56, an der die Partikel 58 der instabilen Suspension abgeschieden werden, verbunden. Der angedeutete Stromfaden bzw. Strömungsweg 54 mit den Feststoffen teilt sich auf die einzelnen Feststoffflächen auf und die Ablagerungen auf der glatten Oberfläche gleiten in der Reinigungsposition (vgl. Stellung in Fig. 1A) als Film 59 ab.

Eine weitere Variante (Fig. 8) der Komposit-Abscheideflächen zeigt zwei funktionale Flächen, die wiederlösbar miteinander verbunden sind und/oder als beabstandete Flächen bzw. Platten angeordnet sind. Dabei ist die aktive Abscheidefläche 63 über Halteklammern 65 mit der Abscheidefläche 62 für die partikulären Stoffe verbunden. Aufgrund der speziellen Struktur der aktiven Abscheidefläche können nur die gelösten und in einer stabilen Suspension vorliegenden Partikel 64 (kleiner als etwa 150 µm) diese Fläche durchströmen. Während dieses Vorgangs werden die gelösten Stoffe an den aktiven Materialien, wie beispielsweise Aktivkohle, angelagert und so die Flüssigkeit gereinigt. Die größeren, partikulären Feststoffe 66 werden an der glatten Oberfläche aus der Flüssigkeit abgeschieden.

In einer nicht dargestellten Ausgestaltung der beschriebenen Abscheideeinrichtungen ist in Strömungsrichtung die erste Lamelle mit mindestens einem Hebel versehen, dessen Drehpunkt oberhalb des Flüssigkeitsspiegels liegt und der mit der Steuereinrichtung so verbunden ist bzw. so an diese gekoppelt ist, dass durch das Verhältnis der Hebelarme um den Drehpunkt eine kleinere, eine unveränderte oder eine größere Winkelveränderung der Lamellen im Verhältnis zur Bewegung des Steuerelements in der Steuereinrichtung erzielt werden kann.

In weiterer Ausgestaltung der obigen Anordnungen ist auf den einzelnen Lamellen mindestens eine Erhöhung, beispielsweise in Form einer Noppe oder eines Tragarmes, angeordnet, auf der sich die in Strömungsrichtung nachgeordneten Lamellen abstützen können, wobei das Ende der Erhöhung, auf dem die nachfolgende Lamelle liegt, so ausgeführt wird, dass während der Verstellung der Winkel für alle Lamellen annähernd gleich ist, so dass durch die Verstellung der ersten Lamelle in Strömungsrichtung das gesamte Lamellenpaket verstellt werden kann.

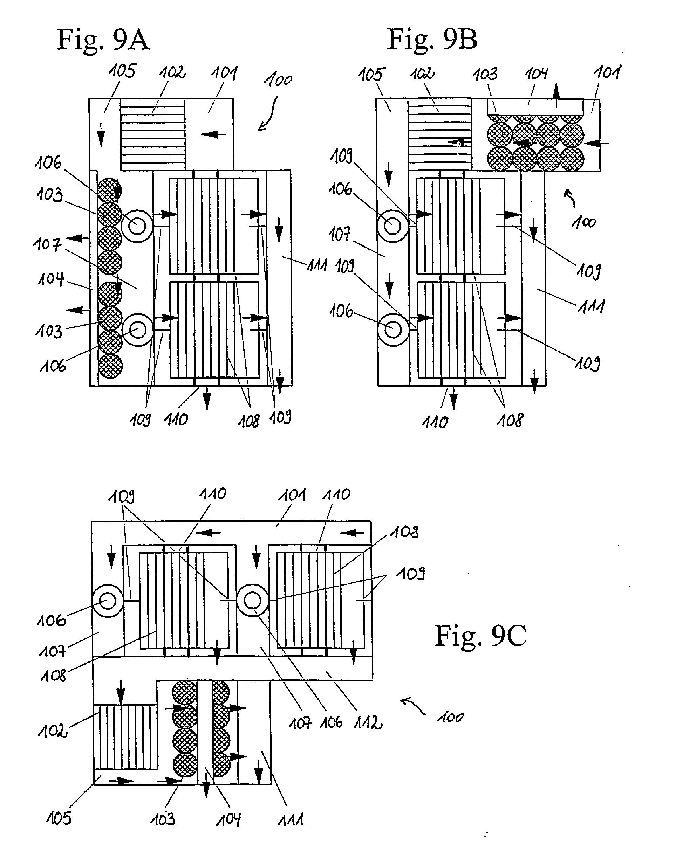

Fig. 9A-C zeigen schematisch drei Ausführungsvarianten eines Wasserbehandlungssystemes 100 mit einem Lamellenabscheider in Kombination mit einer Grobstoffabscheideeinrichtung. Die Grobstoffabscheideeinrichtung umfasst beispielsweise einen Rechen sowie einer Trennstufe für lipoide bzw. lipide Stoffe, beispielsweise einen belüfteten Fettfang. Die einzelnen Anlagenstufen können in monolithischer bzw. integrierter Ausführung oder als separate Stufen ausgeführt und durch Flanschverbindungen zusammengefügt werden. Die Varianten in Fig. 9A bis 9C zeigen drei hauptsächliche Anwendungsfälle der Reinigungskombinationen 100, wobei alle Stufen wiederum mehrfach untereinander kombiniert werden können. Gleiche oder gleichwirkende Elemente sind mit den gleichen Bezugszeichen versehen. Die Pfeile stellen die Fließrichtung der zu behandelnden Flüssigkeit dar.

Die zu behandelnde Flüssigkeit, beispielsweise kommunales Abwasser, wird bei der Variante der Fig. 9A über ein Zulaufgerinne 101 einem Rechensystem 102 zugeführt, in dem Grobstoffe abgeschieden werden. Diese Variante ist besonders für den Einsatz bei "normalem" Abwasser geeignet. Nach dem Rechensystem 102 wird das von Grobstoffen befreite Abwasser über ein Verbindungsgerinne 105 in eine Sammelrinne 107 überführt, in der eine belüftete Fettfangeinrichtung 103 angeordnet ist. Durch die Belüftung wird der Abscheidevorgang der lipophilen Substanzen unterstützt, wobei der Fettfang 103 auch unbelüftet ausgeführt sein kann. Das aufflotierte Fett innerhalb des Fettfanges 103 wird über eine Fettabzugsrinne 104 aus dem Wasserbehandlungssytem 100 entfernt. Das in der Sammelrinne 107 von Fett gereinigte Abwasser muss durch eine Steuereinrichtung 106 eines Abscheidermoduls strömen, wobei über ein Verbindungselement 109 die Lamellen 108 des Moduls bzw. der Module in ihrem Anstellwinkel verändert werden. Die Lammellenabscheidermodule können gemäß einem der in Fig. 1 bis 8 dargestellten Ausführungen ausgestaltet sein. In Ausgestaltung sind einem Modul jeweils ein oder mehrere Steuereinrichtungen 106 zugeordnet oder mehrere Module von Lammellenabscheidern werden durch eine Steuereinrichtung angesteuert.

Die abgeschiedenen partikulären mineralischen Bestandteile des Abwassers, wie z.B. Sand, werden im unteren Teil des Lamellenabscheidermoduls gesammelt und durch eine Austragseinrichtung bzw. ein Austragsorgan 110, beispielsweise eine Transportschnecke, aus der Anlage 100 entfernt. Das mechanisch vorgereinigte Abwasser fällt in das Ablaufgerinne 111 über und verlässt die Kompaktanlage.

Die Variante der Fig. 9B ist für Abwasser mit hohem Lipid-Anteil besonders geeignet. Hier ist in Strömungsrichtung der Fettfang 103 aufgrund des hohen Anteils an lipophilen Substanzen die erste Behandlungsstufe. Eine weitere Verbesserung der Abscheidung von lipophilen Substanzen kann beispielsweise durch einen weiteren Fettfang (nicht dargestellt) in Fließrichtung nach der Grobstoffentfernungseinrichtung 102 erreicht werden.

Die in der Fig. 9C dargestellte Variante kann bevorzugt für feststoffreiche Flüssigkeiten, z.B. mit hohem mineralischem Anteil, verwendet werden, bei denen zuerst über das Zulaufgerinne 101 eine Verteilung des Abwassers auf den bzw. die Lamellenabscheider 108 erfolgt und anschließend die feststofffreie Flüssigkeit über ein Sammelgerinne 112 den nachgeschalteten Behandlungsstufen 102, 103 zugeführt wird.

Der Einsatz von Funktionsbeschichtungen an der Abscheideeinrichtung ist auch dann vorteilhaft, wenn die Abscheideflächen der oben dargestellten Abscheideeinrichtungen nicht mittels der beschrieben Steuereinrichtung bewegt werden. Beispielsweise wenn die Abscheideflächen feststehend sind oder durch andere Betätigungsorgane in ihrer Stellung bzw. Ausrichtung veränderbar sind.

### Bezugszeichenliste:

- 1: Zulauf
- 2: Ablaufkanal
- 3: Gehäuse
- 4, 4a: Strömungskörper
- 5: Führungselement
- 6, 6a: Verbindungselement
- 7: Abscheidefläche
- 8: Haltestange
- 9, 9a: Abscheideeinrichtung
- 10: Umlenkelement
- 11: Steuereinrichtung
- 12: Becken
- 13: Strömungskörper
- 14: erstes Verbindungselement
- 15: Auslenkeinrichtung
- 17: Haltestange
- 18: Lamelle
- 19: zweites Verbindungselement
- 22: Lagerung
- 23: Kurvenscheibe
- 24: Lager
- 25: Steuereinrichtung-Abscheideflächen-Segment
- 26: Drehlager
- 27: Zulaufgerinne
- 28: Verteilungsgerinne
- 29: Flüssigkeit
- 30: Strombahn
- 31: Flächenteilstück
- 32: Drehpunkt
- 33: Strömungskörper
- 34: Nut
- 35: Gehäuse
- 36: Verbindungselement
- 37: Umlenkelement
- 38: Flüssigkeit
- 39: Zuführöffnung
- 40: Umlenkelement
- 41: Führungselement
- 42: Bolzen
- 43: Platte
- 44: Führungselement
- 45: Gehäuse
- 46: Führungselement
- 52: Lagergehäuse
- 53: Spalt
- 54: Stromfaden
- 55: Oberfläche
- 56: Oberfläche
- 57: Partikel
- 58: Partikel
- 59: Film
- 62: Abscheidefläche
- 63: Abscheidefläche
- 64: Partikel
- 65: Halteklammer
- 66: Feststoffe
- 100: Wasserbehandlungssystem
- 101: Zulaufgerinne
- 102: Rechensystem
- 103: Fettfang
- 104: Fettabzugsrinne
- 105: Verbindungsgerinne
- 106: Steuereinrichtung
- 107: Sammelrinne
- 108: Lamelle
- 109: Verbindungselement
- 110: Austragsorgan
- 111: Ablaufgerinne
- 112: Sammelgerinne

## Patentansprüche

1. Vorrichtung zur Abscheidung von Feststoffen (57, 58; 64, 66) aus einer Flüssigkeit (38, 49) mit:
mindestens einem Behälter oder Becken (12) zur Aufnahme feststoffbeladener Flüssigkeit mit mindestens einem Zulauf (1, 27, 101) und Ablauf (2, 111); und
mindestens einer im Behälter oder Becken (12) angeordneten Abscheideeinrichtung (9, 16, 25, 55, 56, 62, 63, 108) für die Feststoffe, wobei die Abscheideeinrichtung Abscheideflächen aufweist, die zumindest zwischen einer Abscheidestellung, bei der die Abscheideflächen gegenüber der Senkrechten mit einem Anstellwinkel (β) geneigt sind, und einer Reinigungsstellung, bei der die Abscheideflächen in etwa senkrecht ausgerichtet sind, verstellbar ist;
**gekennzeichnet durch**
eine mit der Abscheideeinrichtung (9, 16, 25, 55, 56, 62, 63, 108) gekoppelte oder verbundene und **durch** die in den Behälter oder das Becken (12) zugeführte, Flüssigkeit betätigbare Steuereinrichtung (57, 58; 64, 66; 106) mittels der der Anstellwinkel (β) der Abscheideflächen veränderbar oder variierbar ist;
wobei die Steuereinrichtung (57, 58; 64, 66; 106) zumindest eine Strömungsleiteinrichtung (3, 35) aufweist,
in der zumindest ein **durch** zumindest einen Teil der zugeführten Flüssigkeit betätigbarer Strömungskörper (4, 13) angeordnet ist oder
der zumindest ein **durch** zumindest einen Teil der zugeführten Flüssigkeit betätigbarer Strömungskörper zugeordnet ist; und
wobei mittels zumindest einer Auslenk- oder Umlenkeinrichtung eine Auslenkung oder Drehung des zumindest einen Strömungskörpers in eine Änderung des Anstellwinkels (β) der zumindest einen Abscheidefläche umsetzbar ist, so dass mit einsetzender oder zunehmender Strömung eine Kraft auf die Oberfläche des Strömungskörpers ausgeübt wird, welche zur Vergrößerung des Anstellwinkels (β) führt

2. Vorrichtung nach Anspruch 1, wobei die zwischen der Steuereinrichtung (57, 58; 64, 66; 106) und der Abscheideeinrichtung (9, 16, 25, 55, 56, 62, 63, 108) wirkende Auslenk- oder Umlenkeinrichtung zumindest ein zug- oder schubübertragendes Element (6, 8, 14, 36, 109) aufweist, insbesondere eine Kette, ein Seil oder ein Gestänge.

3. Vorrichtung nach Anspruch 1 oder 2, wobei der Strömungskörper (4, 13, 31, 33, 43) zumindest eine Teilfläche mit Durchbrechungen aufweist, insbesondere eine Platte mit länglichen Durchbrechungen, auf denen sich Feststoffe aus der Flüssigkeit ablagern können.

4. Vorrichtung nach einem der vorhergehenden Ansprüche, wobei der Steuereinrichtung (57, 58; 64, 66; 106) eine Erfassungseinrichtung zur Erfassung der Strömungsgeschwindigkeit und/oder des Feststoffgehalts der Flüssigkeit zugeordnet ist und die Steuereinrichtung zusätzlich in Abhängigkeit des durch die Erfassungseinrichtung erfassten Signals die Stellung der zumindest einen Abscheidefläche verändert oder variiert.

5. Vorrichtung nach Anspruch 4, wobei die Erfassungseinrichtung einen mechanischen, elektrischen, optischen, pneumatischen oder hydraulischen Sensor aufweist.

6. Vorrichtung nach einem der vorangehenden Ansprüche, wobei die Abscheideflächen zumindest teilweise eine Oberflächenbeschichtung und/oder eine zumindest teilweise strukturierte Oberfläche aufweisten.

7. Vorrichtung nach einem der vorhergehenden Ansprüche, wobei die Abscheideeinrichtung (9, 16, 25, 55, 56, 62, 63, 108) eine Vielzahl von Lamellen mit jeweils zumindest einer der Abscheideflächen aufweist.

8. Abscheideanordnung (100) zur Abscheidung von Feststoffen (57, 58; 64, 66) mit einer Vorrichtung (9, 16, 25, 55, 56, 62, 63, 108) gemäß einem der vorhergehenden Ansprüche und einer Grobstoffabscheideeinrichtung (102) und/oder einer Fettabscheideeinrichtung (103).

9. Abscheideanordnung nach Anspruch 8, wobei die Grobstoffabscheideeinrichtung (102) und/oder die Fettabscheideeinrichtung (103) der Vorrichtung (9,16, 25, 55, 56, 62, 63, 108) vorgeschaltet sind.

10. Abscheideanordnung nach Anspruch 8 oder 9, wobei die Vorrichtung (9, 16, 25, 55, 56, 62, 63, 108) und die Grobstoffabscheideeinrichtung (102) und/oder die Fettabscheideeinrichtung (103) als integriertes Abscheidemodul ausgebildet sind.

11. Verfahren zur Abscheidung von Feststoffen (57, 58; 64, 66) aus einer in einem Behälter oder einem Becken (12) stehenden und/oder strömenden Flüssigkeit (38, 49), wobei der Behälter oder das Becken (12) mindestens eine Zulauf- und Ablauföffnung sowie mindestens eine Abscheidevorrichtung (9, 16, 25, 55, 56, 62, 63, 108) für Feststoffe aufweist, wobei die Abscheidevorrichtung (9, 16, 25, 55, 56, 62, 63,108) Abscheideflächen aufweist deren Stellung veränderbar ist zwischen einer Abscheidestellung, bei der die Abscheideflächen gegenüber der Senkrechten mit einem Anstellwinkel (β) geneigt sind, und einer Reinigungsstellung, bei der die Abscheideflächen in etwa senkrecht ausgerichtet sind;
**dadurch gekennzeichnet,**
**dass** der Anstellwinkel (β) der Abscheideflächen der Abscheidevorrichtung (9, 16, 25, 55, 56, 62, 63, 108) mittels eines Strömungskörpers einer Steuereinrichtung (11, 106) veränderbar ist, welche den Strömungsdruck der in den Behälter oder das Becken zugeführten Flüssigkeit in die Verstellung der Abscheideeinrichtung (9, 16, 25, 55, 56, 62, 63, 108) umwandelt, so dass mit einsetzender oder zunehmender Strömung eine Kraft auf die Oberfläche des Strömungskörpers ausgeübt wird, welche zur Vergrößerung des Anstellwinkels (β) fürt.

12. Verfahren nach Anspruch 11, wobei die Abscheideflächen lammellenartig angeordnet sind.

## Claims

1. Apparatus for separating solids (57, 58; 64, 66) from a liquid (38, 49), having:
at least one container or pool (12) for receiving solid-laden liquid including at least one inlet (1, 27, 101) and drain (2, 111); and
at least one separating device (9, 16, 25, 55, 56, 62, 63, 108) for the solids arranged in the container or pool (12), wherein the separating device comprises separating surfaces variable at least between a separating position, in which the separating surfaces are inclined with respect to the vertical at an setting angle (β), and a cleaning position, in which the separating surfaces are approximately vertically oriented;
**characterized by**
a control device (57, 58; 64, 66; 106) coupled or connected to the separating device (9, 16, 25, 55, 56, 62, 63, 108) and operable by the liquid supplied into the container or pool (12), by means of which the setting angle (β) of the separating surfaces is changeable or variable;
wherein the control device (57, 58; 64, 66; 106) comprises at least one flow guiding device (3, 35),
in which at least one flow body (4, 13) is arranged, which is operable by at least a portion of the supplied liquid, or
with which at least one flow body operable by at least a portion of the supplied liquid is associated; and
wherein deflection or rotation of the at least one flow body is convertible into a change of the setting angle (β) of the at least one separating surface by means of at least one deflecting or redirecting device, such that force is exerted on the surface of the flow body with incipient or increasing flow, which results in increase of the setting angle (β).

2. Apparatus according to claim 1, wherein the deflecting or redirecting device acting between the control device (57, 58; 64, 66; 106) and the separating device (9, 16, 25, 55, 56, 62, 63, 108) comprises at least one traction or thrust transferring element (6, 8, 14, 36, 109), in particular a chain, a rope or a linkage.

3. Apparatus according to claim 1 or 2, wherein the flow body (4, 13, 31, 33, 43) comprises at least one partial surface with perforations, in particular a plate with elongate perforations, on which solids from the liquid can deposit.

4. Apparatus according to anyone of the preceding claims, wherein a detecting device for detecting the flow velocity and/or the solid content of the liquid is associated with the control device (57, 58; 64, 66; 106) and the control device additionally changes or varies the position of the at least one separating surface depending on the signal detected by the detecting device.

5. Apparatus according to claim 4, wherein the detecting device comprises a mechanical, electrical, optical, pneumatic or hydraulic sensor.

6. Apparatus according to anyone of the preceding claims, wherein the separating surfaces comprise at least partially a surface coating and/or an at least partially structured surface.

7. Apparatus according to anyone of the preceding claims, wherein the separating device (9, 16, 25, 55, 56, 62, 63, 108) comprises a plurality of blades with each at least one of the separating surfaces.

8. Separating assembly (100) for separating solids (57, 58; 64, 66) with a device (9, 16, 25, 55, 56, 62, 63, 108) according to any one of the preceding claims and a coarse material separating device (102) and/or a fat separating device (103).

9. Separating assembly according to claim 8, wherein the coarse material separating device (102) and/or the fat separating device (103) are located upstream of the device (9, 16, 25, 55, 56, 62, 63, 108).

10. Separating assembly according to claim 8 or 9, wherein the device (9, 16, 25, 55, 56, 62, 63, 108) and the coarse material separating device (102) and/or the fat separating device (103) are formed as an integrated separating module.

11. Method for separating solids (57, 58; 64, 66) from a liquid (38, 49) standing and/or flowing in a container or pool (12), wherein the container or pool (12) comprises at least one inlet and drain opening as well as at least one separating device (9, 16, 25, 55, 56, 62, 63, 108) for solids, wherein the separating device (9, 16, 25, 55, 56, 62, 63, 108) comprises separating surfaces, the position of which is changeable between a separating position, in which the separating surfaces are inclined with respect to the vertical at an setting angle (β), and a cleaning position, in which the separating surfaces are approximately vertically oriented;
**characterized in that**
the setting angle (β) of the separating surfaces of the separating device (9, 16, 25, 55, 56, 62, 63, 108) is changeable by means of a flow body of a control device (11, 106), which converts the flow pressure of the liquid supplied into the container or pool into the variation of the separating device (9, 16, 25, 55, 56, 62, 63, 108), such that force is exerted on the surface of the flow body with incipient or increasing flow, which results in increase of the setting angle (β).

12. Method according to claim 11, wherein the separating surfaces are arranged in lamellar manner.

## Revendications

1. Dispositif de séparation de matières solides (57, 58 ; 64, 66) d'un liquide (38, 49), comprenant :
au moins un récipient ou réservoir (12) destiné à recevoir un liquide chargé de matières solides et comportant une entrée (1, 27, 101) et une sortie (2, 111) ; et
au moins un dispositif de séparation (9, 16, 25, 55, 56, 62, 63, 108) disposé dans le récipient ou réservoir (12) pour les matières solides, le dispositif de séparation présentant des surfaces de séparation qui sont orientables au moins entre une position de séparation dans laquelle les surfaces de séparation sont inclinées d'un angle d'incidence (β) par rapport à la verticale et une position de nettoyage dans laquelle les surfaces de séparation sont orientées à peu près verticalement ;
**caractérisé par**
un dispositif de commande (57, 58 ; 64, 66 ; 106) couplé ou relié au dispositif de séparation (9, 16, 25, 55, 56, 62, 63, 108) et pouvant être actionné par le liquide amené dans le récipient ou réservoir (12), au moyen duquel il est possible de modifier ou faire varier l'angle d'incidence (β) des surfaces de séparation ;
le dispositif de commande (57, 58 ; 64, 66 ; 106) présentant au moins un dispositif de guidage de courant (3, 35),
dans lequel est disposé au moins un corps d'écoulement (4, 13) pouvant être actionné par au moins une partie du liquide amené ou
auquel est associé au moins un corps d'écoulement pouvant être actionné par au moins une partie du liquide amené ; et
une déviation ou une rotation dudit au moins un corps d'écoulement pouvant être convertie en une modification de l'angle d'incidence (β) de ladite au moins une surface de séparation au moyen d'au moins un dispositif de déviation ou de renvoi, de sorte que lorsque l'écoulement commence ou augmente, une force est exercée sur la surface du corps d'écoulement, laquelle entraîne une augmentation de l'angle d'incidence (β).

2. Dispositif selon la revendication 1, dans lequel le dispositif de déviation ou de renvoi agissant entre le dispositif de commande (57, 58 ; 64, 66 ; 106) et le dispositif de séparation (9, 16, 25, 55, 56, 62, 63, 108) présente au moins un élément transmetteur de traction ou de poussée (6, 8, 14, 36, 109), en particulier une chaîne, un câble ou une tringle.

3. Dispositif selon la revendication 1 ou 2, dans lequel le corps d'écoulement (4, 13, 31, 33, 43) présente au moins une surface partielle avec des ouvertures, en particulier une plaque avec des ouvertures allongées sur lesquelles les matières solides provenant du liquide peuvent se déposer.

4. Dispositif selon une des revendications précédentes, dans lequel un dispositif de détection pour détecter la vitesse d'écoulement et/ou la teneur en matières solides du liquide est associé au dispositif de commande (57, 58 ; 64, 66 ; 106) et le dispositif de commande modifie ou fait varier en plus la position de ladite au moins une surface de séparation en fonction du signal détecté par le dispositif de détection.

5. Dispositif selon la revendication 4, dans lequel le dispositif de détection présente un capteur mécanique, électrique, optique, pneumatique ou hydraulique.

6. Dispositif selon une des revendications précédentes, dans lequel les surfaces de séparation présentent au moins partiellement un revêtement de surface et/ou une surface au moins partiellement structurée.

7. Dispositif selon une des revendications précédentes, dans lequel le dispositif de séparation (9, 16, 25, 55, 56, 62, 63, 108) présente une pluralité de lamelles avec chaque fois au moins une des surfaces de séparation.

8. Système de séparation (100) destiné à séparer des matières solides (57, 58 ; 64, 66) avec un dispositif (9, 16, 25, 55, 56, 62, 63, 108) selon une des revendications précédentes et un dispositif de séparation des matières grossières (102) et/ou un dispositif de séparation des graisses (103).

9. Système de séparation selon la revendication 8, dans lequel le dispositif de séparation des matières grossières (102) et/ou le dispositif de séparation des graisses (103) sont placés avant le dispositif (9, 16, 25, 55, 56, 62, 63, 108).

10. Système de séparation selon la revendication 8 ou 9, dans lequel le dispositif (9, 16, 25, 55, 56, 62, 63, 108) et le dispositif de séparation des matières grossières (102) et/ou le dispositif de séparation des graisses (103) sont réalisés sous la forme d'un module de séparation intégré.

11. Procédé de séparation des matières solides (57, 58 ; 64, 66) contenues dans un liquide (38, 49) immobile et/ou en écoulement dans un récipient ou un réservoir (12), le récipient ou le réservoir (12) présentant au moins une ouverture d'entrée et une ouverture de sortie ainsi qu'au moins un dispositif de séparation (9, 16, 25, 55, 56, 62, 63, 108) pour matières solides, le dispositif de séparation (9, 16, 25, 55, 56, 62, 63, 108) présentant des surfaces de séparation dont la position est modifiable entre une position de séparation dans laquelle les surfaces de séparation sont inclinées d'un angle d'incidence (β) par rapport à la verticale et une position de nettoyage dans laquelle les surfaces de séparation sont orientées à peu près verticalement,
**caractérisé en ce**
**que** l'angle d'incidence (β) des surfaces de séparation du dispositif de séparation (9, 16, 25, 55, 56, 62, 63, 108) est modifiable au moyen d'un corps d'écoulement d'un dispositif de commande (11, 106) qui convertit la pression d'écoulement du liquide amené dans le récipient ou le réservoir en une orientation du dispositif de séparation (9, 16, 25, 55, 56, 62, 63, 108), de sorte que lorsque l'écoulement commence ou augmente, une force est exercée sur la surface du corps d'écoulement, laquelle entraîne une augmentation de l'angle d'incidence (β).

12. Procédé selon la revendication 11, dans lequel les surfaces de séparation sont disposées à la manière de lamelles.
